(19) **Europäisches Patentamt / European Patent Office / Office européen des brevets**

(11) **EP 4 741 338 A1**

(12) **EUROPEAN PATENT APPLICATION**
published in accordance with Art. 153(4) EPC

(43) Date of publication:
**13.05.2026 Bulletin 2026/20**

(21) Application number: **23944438.3**

(22) Date of filing: **02.11.2023**

(51) International Patent Classification (IPC):
**C01B 25/14** (2006.01) **H01B 1/06** (2006.01)
**H01B 1/10** (2006.01) **H01M 10/052** (2010.01)
**H01M 10/0562** (2010.01)

(52) Cooperative Patent Classification (CPC):
**Y02E 60/10**

(86) International application number:
**PCT/JP2023/039782**

(87) International publication number:
**WO 2025/009191 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.07.2023 JP 2023110731**

(71) Applicant: **AGC INC.**
**Chiyoda-ku,**
**Tokyo 1008405 (JP)**

(72) Inventor: **KUNISA, Yasuhiro**
**Tokyo 100-8405 (JP)**

(74) Representative: **Müller-Boré & Partner**
**Patentanwälte PartG mbB**
**Friedenheimer Brücke 21**
**80639 München (DE)**

(54) **SULFIDE SOLID ELECTROLYTE POWDER, SOLID ELECTROLYTE LAYER, AND LITHIUM ION SECONDARY BATTERY**

(57) The present invention relates to sulfide solid electrolyte powder in which the content of Al on a mass basis is less than 50 ppm; the content of Zr on a mass basis is less than 50 ppm; and the particle diameter D50 is less than 1 μm.

*FIG. 1*

```
┌─────────────────────────────────────┐
│    SULFIDE SOLID ELECTROLYTE         │
└─────────────────────────────────────┘
              │    · · · S1: COARSE PULVERIZATION
              ▼
┌─────────────────────────────────────┐
│ COARSELY PULVERIZED PRODUCT OF       │
│    SULFIDE SOLID ELECTROLYTE         │
└─────────────────────────────────────┘
              │    · · · S2: FINE PULVERIZATION
              ▼
┌─────────────────────────────────────┐
│  SULFIDE SOLID ELECTROLYTE POWDER    │
└─────────────────────────────────────┘
```

EP 4 741 338 A1

**Description**

TECHNICAL FIELD

The present invention relates to a sulfide solid electrolyte powder, a solid electrolyte layer, and a lithium ion secondary battery.

BACKGROUND ART

Lithium ion secondary batteries are widely used in portable electronic devices such as a mobile phone and a notebook computer.

In the related art, a liquid electrolyte has been used in a lithium ion secondary battery, but a lithium ion all-solid-state battery (hereinafter, also referred to as a solid battery) in which a solid electrolyte is used as an electrolyte of the lithium ion secondary battery has attracted attention from the viewpoint that improvement of safety and high-speed charging and discharging can be expected.

The solid electrolytes are roughly classified into a sulfide solid electrolyte and an oxide solid electrolyte. Among them, the sulfide solid electrolyte exhibits high ion conductivity since the sulfide solid electrolyte contains sulfide ions having high polarizability.

As the sulfide solid electrolyte, there has been known LGPS crystals such as $Li_{10}GeP_2S_{12}$, argyrodite crystals such as $Li_6PS_5Cl$, LPS crystallized glasses such as a $Li_7P_3S_{11}$ crystallized glass, and the like.

The solid electrolyte is inferior to a liquid electrolyte in terms of permeability into a positive electrode or a negative electrode. Therefore, for the purpose of improving performance of the battery, a solid electrolyte powder having a small particle diameter or having no coarse particles which has a large particle diameter is used to form more interfaces with the active material.

As a technique of reducing the particle diameter of the solid electrolyte powder, for example, there is a method of pulverizing the obtained solid electrolyte or a coarsely pulverized product thereof by a wet bead mill using hard beads having a diameter of about 0.1 mm to 1 mm.

Examples of the kind of beads include zirconia beads and alumina beads, and since the zirconia beads have a large specific gravity, excessive pulverization is likely to occur, and a decrease in lithium ion conductivity is likely to occur.

In contrast, since the alumina beads have a smaller specific gravity than the zirconia beads, they are characterized in that the particle size of the pulverized solid electrolyte powder is easily maintained. Actually, Patent Literature 1 discloses a solid electrolyte obtained by a wet bead mill using alumina beads.

CITATION LIST

PATENT LITERATURE

Patent Literature 1: WO2020/105604

SUMMARY OF INVENTION

TECHNICAL PROBLEM

With respect to this, a sulfide solid electrolyte powder obtained by pulverizing a sulfide solid electrolyte is required to have a further improved lithium ion conductivity.

Therefore, an object of the present invention is to provide a sulfide solid electrolyte powder exhibiting a good lithium ion conductivity while maintaining a particle size of the powder, and a solid electrolyte layer and a lithium ion secondary battery containing the sulfide solid electrolyte powder.

SOLUTION TO PROBLEM

As a result of intensive studies, the present inventors have found that when the sulfide solid electrolyte powder is pulverized using a bead mill in order to maintain the particle size thereof, contamination caused by alumina ($Al_2O_3$) or zirconia ($ZrO_2$) is present in the obtained sulfide solid electrolyte powder. As a result of further studies, the present inventors have found that the contamination is a cause of a decrease in lithium ion conductivity. That is, it is considered that the contamination inhibits continuity of the sulfide solid electrolyte powder and breaks a lithium ion conduction path, which is a factor of the decrease in lithium ion conductivity.

With respect to this, the present inventors have found that the above problems can be solved by setting a content of Al (aluminum) and a content of Zr (zirconium) contained in the sulfide solid electrolyte powder to a certain amount or less, and have completed the present invention.

That is, the present invention relates to the following.

[1] A sulfide solid electrolyte powder including, in content in a mass basis:

less than 50 ppm of Al; and
less than 50 ppm of Zr,
in which a particle diameter D50 is less than 1 $\mu$m.

[2] The sulfide solid electrolyte powder according to [1],
in which a BET diameter calculated based on a BET specific surface area is 0.10 $\mu$m to 0.30 $\mu$m.
[3] The sulfide solid electrolyte powder according to [1] or [2],

in which a sulfide solid electrolyte constituting the sulfide solid electrolyte powder includes a crystal phase, and the crystal phase includes an argyrodite crystal structure.

[4] The sulfide solid electrolyte powder according to [1] or [2],
in which a sulfide solid electrolyte constituting the sulfide solid electrolyte powder has a composition represented by $Li_\alpha PS_\beta$ ($5.5 \leq \alpha \leq 5.6$ and $4.3 \leq \beta \leq 4.4$).
[5] A solid electrolyte layer comprising the sulfide solid electrolyte powder according to any one of [1] to [4].
[6] A lithium ion secondary battery comprising the sulfide solid electrolyte powder according to any one of [1] to [4].

ADVANTAGEOUS EFFECTS OF INVENTION

According to the present invention, it is possible to obtain a sulfide solid electrolyte powder having an excellent lithium ion conductivity while maintaining a particle size of the powder. Therefore, a solid electrolyte layer and a lithium ion secondary battery containing the above sulfide solid electrolyte powder can have excellent battery properties due to the good lithium ion conductivity.

BRIEF DESCRIPTION OF DRAWINGS

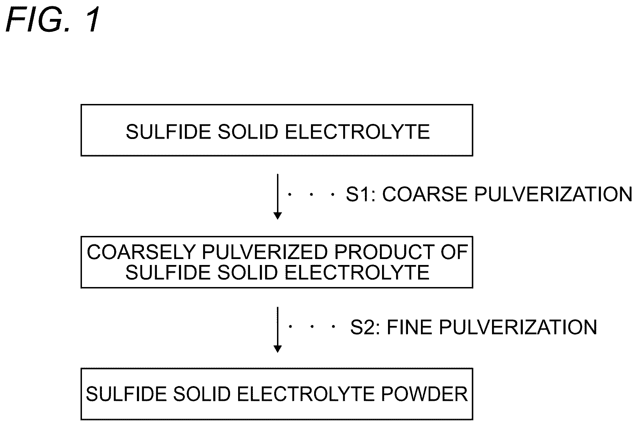

FIG. 1 is a flow diagram showing a method for producing a sulfide solid electrolyte powder according to the present embodiment.

DESCRIPTION OF EMBODIMENTS

Hereinafter, the present invention is described in detail, but the present invention is not limited to the following embodiment, and can be freely modified and implemented without departing from the gist of the present invention. In addition, "to" indicating a numerical range is used to include numerical values written before and after it as a lower limit value and an upper limit value.

In the present description, ppm by mass and ppm by weight are synonymous, and mass% and wt% are synonymous.

<Sulfide Solid Electrolyte Powder>

In a sulfide solid electrolyte powder according to the present embodiment, a content in a mass basis satisfies Al: less than 50 ppm and Zr: less than 50 ppm. In addition, a particle diameter D50 of the sulfide solid electrolyte powder is less than 1 $\mu$m.

The particle diameter D50 of the sulfide solid electrolyte powder is less than 1 $\mu$m, and preferably 0.40 $\mu$m or more and less than 1 $\mu$m.

Here, when the particle diameter D50 is less than 1 $\mu$m, more interfaces with an active material are formed, and battery properties are improved. The particle diameter D50 is preferably 0.95 $\mu$m or less, more preferably 0.90 $\mu$m or less, still more preferably 0.80 $\mu$m or less, and particularly preferably 0.70 $\mu$m or less.

The particle diameter D50 is not particularly limited in lower limit, and is preferably 0.40 $\mu$m or more, more preferably 0.45 $\mu$m or more, and still more preferably 0.50 $\mu$m or more, from the viewpoint of handleability and from the viewpoint of hardly impairing crystallinity and realizing a good lithium ion conductivity.

In the present description, the particle diameter D50 is a volume-based cumulative 50% diameter determined by a laser diffraction particle size distribution analyzer. That is, a particle size distribution is measured by a laser diffraction and scattering method, a cumulative curve is determined by setting a total volume of the sulfide solid electrolyte to 100%, and a particle diameter at a point on the cumulative curve where the cumulative volume is 50% represents the particle diameter D50.

Particle diameters D90 and D10 to be described later are particle diameters at which the cumulative volumes are 90% and 10%, respectively, on a cumulative curve obtained by the same measurement as described above.

When the particle diameter D50 of the sulfide solid electrolyte powder is less than 1 $\mu$m, the particle diameter is usually a particle diameter that can be mass-produced by pulverization using a bead mill, and it is not realistic to make the particle diameter D50 less than 1 $\mu$m by mortar pulverization, Attritor (registered trademark), a disk mill, a turbo mill, a vibration mill, or the like known as other pulverization means.

In contrast, for example, by adopting a bead mill using alumina beads or zirconia beads, the value of the particle diameter D50 can be made less than 1 $\mu$m.

In the sulfide solid electrolyte powder according to the present embodiment, the particle diameter at a point in a volume-based particle size distribution curve where the cumulative volume is 90% (particle diameter D90) is preferably 0.80 $\mu$m to 3.0 $\mu$m, more preferably 0.90 $\mu$m to 2.5 $\mu$m, still more preferably 0.90 $\mu$m to 2.0 $\mu$m, and particularly preferably 0.90 $\mu$m to 1.8 $\mu$m.

Here, the particle diameter D90 is preferably 3.0 $\mu$m or less, more preferably 2.5 $\mu$m or less, still more preferably 2.0 $\mu$m or less, and particularly preferably 1.8 $\mu$m or less, from the viewpoint of forming more interfaces with the active material and further improving the battery properties.

The particle diameter D90 is preferably 0.80 $\mu$m or more, and more preferably 0.90 $\mu$m or more, from the viewpoint of hardly impairing the crystallinity and obtaining a good lithium ion conductivity in the sulfide solid electrolyte powder.

In the sulfide solid electrolyte powder according to the present embodiment, the particle diameter at a point in the volume-based particle size distribution curve where the cumulative volume is 10% (particle diameter D10) is preferably 0.10 $\mu$m to 0.80 $\mu$m, more preferably 0.15 $\mu$m to 0.70 $\mu$m, still more preferably 0.20 $\mu$m to 0.65 $\mu$m, and particularly preferably 0.25 $\mu$m to 0.60 $\mu$m.

Here, the particle diameter D10 is preferably 0.80 $\mu$m or less, more preferably 0.70 $\mu$m or less, still more preferably 0.65 $\mu$m or less, and particularly preferably 0.60 $\mu$m or less, from the viewpoint of forming more interfaces with the active material and improving the battery properties.

The particle diameter D10 is preferably 0.10 $\mu$m or more, more preferably 0.15 $\mu$m or more, still more preferably 0.20 $\mu$m or more, and particularly preferably 0.25 $\mu$m or more, from the viewpoint of hardly impairing the crystallinity and obtaining a good lithium ion conductivity in the sulfide solid electrolyte powder.

In the sulfide solid electrolyte powder according to the present embodiment, a BET diameter calculated based on a BET specific surface area is preferably 0.10 $\mu$m to 0.30 $\mu$m, more preferably 0.12 $\mu$m to 0.25 $\mu$m, and still more preferably 0.13 $\mu$m to 0.23 $\mu$m.

Here, the BET diameter is preferably 0.10 $\mu$m or more, more preferably 0.12 $\mu$m or more, and still more preferably 0.13 $\mu$m or more, from the viewpoint of hardly impairing the crystallinity and obtaining a good lithium ion conductivity in the sulfide solid electrolyte powder.

The BET diameter is preferably 0.30 $\mu$m or less, more preferably 0.25 $\mu$m or less, and still more preferably 0.23 $\mu$m or less, from the viewpoint of forming more interfaces with the active material and further improving the battery properties.

In the present description, the BET diameter means a particle diameter calculated using the following equation based on the specific surface area measured by using a BET method (BET specific surface area).

BET diameter (nm) = 6/[true density (g/cm$^3$) $\times$ BET specific surface area (m$^2$/g)] $\times$ 1000

The BET specific surface area is a value obtained by using a nitrogen adsorption BET multipoint method.

The BET specific surface area of the sulfide solid electrolyte powder according to the present embodiment is preferably 10 m$^2$/g to 28 m$^2$/g, more preferably 13 m$^2$/g to 26 m$^2$/g, and still more preferably 13 m$^2$/g to 20 m$^2$/g.

Here, the BET specific surface area is preferably 10 m$^2$/g or more, and more preferably 13 m$^2$/g or more, from the viewpoint of forming more interfaces with the active material and further improving the battery properties.

The BET specific surface area is preferably 28 m$^2$/g or less, more preferably 26 m$^2$/g or less, and still more preferably 20 m$^2$/g or less, from the viewpoint of hardly impairing the crystallinity and obtaining a good lithium ion conductivity in the sulfide solid electrolyte powder.

The particle diameter D50, the BET diameter, and the BET specific surface area can be adjusted by appropriately changing conditions in pulverizing a sulfide solid electrolyte.

The sulfide solid electrolyte powder according to the present embodiment is an aggregate of particles of a sulfide solid electrolyte. As the sulfide solid electrolyte before pulverization, which is a base of the sulfide solid electrolyte powder according to the present embodiment, a well-known sulfide solid electrolyte can be used.

Specific examples of the sulfide solid electrolyte according to the present embodiment include: a sulfide solid electrolyte having a crystal structure containing a Li element, a P element, and a S element called an LPS-based crystal structure, such as $Li_7P_3S_{11}$; a sulfide solid electrolyte having a crystal structure containing a Li element, a Ge element, a P element, and a S element called an LGPS-based crystal structure, such as $Li_{10}GeP_2S_{12}$; a sulfide solid electrolyte having an argyrodite crystal structure containing a Li element, a P element, a S element, and a Ha element; a sulfide solid electrolyte made of a Li-P-S-Ha-based crystallized glass; a sulfide solid electrolyte having a thio-LISICON crystal structure; and a crystal phase containing an oxide. The sulfide solid electrolyte may include a crystal phase having the above crystal structure and an amorphous phase. The sulfide solid electrolyte constituting the sulfide solid electrolyte powder according to the present embodiment is not limited to having the above crystal structures, and some elements may be substituted with other elements.

Among the crystal structures, from the viewpoint of the lithium ion conductivity and the battery properties, the sulfide solid electrolyte constituting the sulfide solid electrolyte powder according to the present embodiment preferably includes a crystal phase, and the crystal phase preferably has an LPS-based crystal structure or an argyrodite crystal structure.

In the case where the crystal structure of the crystal phase of the sulfide solid electrolyte is an LPS-based crystal structure, the sulfide solid electrolyte preferably has a composition represented by $Li_\alpha PS_\beta$ ($5.5 \leq \alpha \leq 5.6$ and $4.3 \leq \beta \leq 4.4$). When the sulfide solid electrolyte powder according to the present embodiment is a powder of a sulfide solid electrolyte having an LPS-based crystal structure having the above composition, high lithium ion conductivity can be ensured.

The LPS-based crystal structure may contain at least one kind of a Cl element and a Br element in addition to the Li element, the P element, and the S element.

In the case where the crystal structure of the crystal phase of the sulfide solid electrolyte is an argyrodite crystal structure, the argyrodite crystal structure is a crystal structure possessed by a group of compounds derived from a mineral represented by a composition formula $Ag_8GeS_6$.

In the case where the sulfide solid electrolyte has an argyrodite crystal structure, the sulfide solid electrolyte more preferably contains, as the Ha element, at least one kind of element selected from the group consisting of Cl, Br, and I, and still more preferably contains two or more kinds of elements selected from the above group.

In the above, as the Ha element, it is still more preferable to contain at least one of Cl and Br, and it is even more preferable to contain Cl and Br.

The composition formula of argyrodite is represented by $Li_{\alpha'}PS_{\beta'}Ha_{\gamma'}$, and preferably satisfies relationships of $5 \leq \alpha' \leq 7$, $4 \leq \beta' \leq 6$ and $1.3 \leq \gamma' \leq 2$. Such an element ratio more preferably satisfies relationships of $5.1 < \alpha' < 6.3$, $4 < \beta' < 5.3$, and $1.4 \leq \gamma' \leq 1.9$, and still more preferably satisfies relationships of $5.2 < \alpha' < 6.2$, $4.1 < \beta' < 5.2$, and $1.5 \leq \gamma' \leq 1.8$.

That is, $\alpha'$ is preferably 5 or more, more preferably more than 5.1, still more preferably more than 5.2, and is preferably 7 or less, more preferably less than 6.3, still more preferably less than 6.2. $\beta'$ is preferably 4 or more, more preferably more than 4, still more preferably more than 4.1, and is preferably 6 or less, more preferably less than 5.3, still more preferably less than 5.2. $\gamma'$ is preferably 1.3 or more, more preferably 1.4 or more, still more preferably 1.5 or more, and is preferably 2 or less, more preferably 1.9 or less, still more preferably 1.8 or less.

In the argyrodite crystal structure, a part of the S element may be substituted with the Ha element, an O element, Se, Te, $BH_4$, CN, or the like. Further, a part of the P element may be substituted with a Si element, an Al element, a Sn element, an In element, a Cu element, a Sb element, a Ge element, or the like.

In the present description, the sulfide solid electrolyte having an LPS-based crystal structure or an argyrodite crystal structure means that the sulfide solid electrolyte includes at least crystal phases of these crystal structures.

The sulfide solid electrolyte according to the present embodiment may be a sulfide solid electrolyte including a crystal phase and an amorphous phase, and a crystallinity is preferably 80 mass% to 100 mass%, more preferably 85 mass% to 100 mass%, and still more preferably 90 mass% to 100 mass%.

Here, the crystallinity is preferably 80 mass% or more, more preferably 85 mass% or more, and still more preferably 90 mass% or more, from the viewpoint of ensuring the lithium ion conductivity.

The crystallinity is preferably high, and may be 100 mass%, from the viewpoint of ensuring the lithium ion conductivity.

In the present description, the crystallinity is a ratio of the crystal phase to a total of the ratio of the crystal phase and the amorphous phase, and can be measured by X-ray diffraction measurement.

In the sulfide solid electrolyte powder according to the present embodiment, the content in a mass basis is Al: less than 50 ppm and Zr: less than 50 ppm.

As described above, in order to make the particle diameter D50 of the sulfide solid electrolyte powder less than 1 μm, fine pulverization using a bead mill is necessary.

Here, a vessel for the bead mill is usually made of zirconia-reinforced alumina in consideration of thermal conductivity for cooling. Among them, zirconia may be used. Beads (media) of the bead mill are usually alumina ($Al_2O_3$) or

zirconia ($ZrO_2$).

With respect to this, when the fine pulverization using a bead mill is performed as described above in order to obtain a sulfide solid electrolyte powder having a particle diameter D50 of less than 1 μm, Al and Zr derived from the vessel and media cause contamination. Therefore, the content of at least one of Al and Zr in a sulfide solid electrolyte powder in the related art has been 50 ppm or more in a mass basis. Then, the present inventors have found that Al and Zr contained as the contamination cause a decrease in lithium ion conductivity.

In the case where the sulfide solid electrolyte powder according to the present embodiment contains 50 ppm or more of Al in a mass basis, an ion conduction path is inhibited, and the lithium ion conductivity decreases. In contrast, the content of Al in the present embodiment is less than 50 ppm, preferably 49 ppm or less, more preferably 20 ppm or less, still more preferably 10 ppm or less, particularly preferably 5 ppm or less, and most preferably 1 ppm or less in a mass basis.

The lower limit of the content of Al is not particularly limited, and is, for example, 0.01 ppm.

In the case where the sulfide solid electrolyte powder according to the present embodiment contains 50 ppm or more of Zr in a mass basis, similar to the case of Al, the ion conduction path is inhibited, and the lithium ion conductivity decreases. In contrast, the content of Zr in the present embodiment is less than 50 ppm, preferably 49 ppm or less, more preferably 20 ppm or less, still more preferably 10 ppm or less, particularly preferably 5 ppm or less, and most preferably 1 ppm or less in a mass basis.

The lower limit of the content of Zr is not particularly limited, and is, for example, 0.01 ppm.

The contents of Al and Zr contained in the sulfide solid electrolyte powder can be measured by high-frequency inductively coupled plasma (ICP) emission spectrometry, and specifically, can be measured by a method described in Examples to be described later.

The contents of Al and Zr can be realized, for example, by subjecting a coarsely pulverized product obtained by coarsely pulverizing the obtained sulfide solid electrolyte to fine pulverization using high purity alumina beads. The high purity is, for example, a purity of 99.9% or more.

The lithium ion conductivity of the sulfide solid electrolyte powder according to the present embodiment is preferably 2 mS/cm or more, more preferably 3 mS/cm or more, still more preferably 3.5 mS/cm or more, particularly preferably 4 mS/cm or more, and is preferably as high as possible, from the viewpoint of obtaining good battery properties when used in a lithium ion secondary battery.

The upper limit of the lithium ion conductivity is not particularly limited, and is, for example, 15 mS/cm.

As the lithium ion conductivity in the present description, a value determined using an AC impedance measurement device for a measurement sample obtained as a powder compact by applying a pressure of 380 MPa to the sulfide solid electrolyte powder is used. Here, measurement conditions in the AC impedance measurement are a measurement frequency of 100 Hz to 1 MHz, a measurement voltage of 100 mV, and a measurement temperature of 25°C.

The sulfide solid electrolyte powder according to the present embodiment is suitably used in an all-solid-state lithium ion secondary battery by being treated using a well-known method as desired, and then applying a pressure with a positive electrode active material or a negative electrode active material to form a positive electrode layer or a negative electrode layer, which is an electrode mixture, or if necessary, also applying a pressure with an additive such as a binder to form a solid electrolyte layer.

<Method for Producing Sulfide Solid Electrolyte Powder>

As shown in FIG. 1, a method for producing the sulfide solid electrolyte powder according to the present embodiment includes the following steps in order.

Step 1: a step of preparing a sulfide solid electrolyte
Step 2: STEP S1 of coarsely pulverizing the sulfide solid electrolyte to obtain a coarsely pulverized product of the sulfide solid electrolyte
Step 3: STEP S2 of finely pulverizing the coarsely pulverized product of the sulfide solid electrolyte to obtain a sulfide solid electrolyte powder

Hereinafter, the steps are described in order.

· Step 1

The step 1 is a step of preparing a sulfide solid electrolyte. The sulfide solid electrolyte may be synthesized or may be commercially available. In the case of synthesizing the sulfide solid electrolyte, a well-known method can be adopted, and a melting method is preferred from the viewpoint of homogeneity of the electrolyte.

In the case of synthesizing the sulfide solid electrolyte, for example, it is preferable to include a step of obtaining a raw material mixture, a step of reacting the raw material mixture, and a step of performing crystallization or amorphization.

The reaction in the step of reacting the raw material mixture may be a heating reaction or a mechanochemical reaction. The raw material mixture may be heated and crystallized or amorphized to obtain a sulfide solid electrolyte, and in this case, it is not necessary to include the step of performing crystallization or amorphization separately. In addition to a step of obtaining a crystal phase or an amorphous phase, a step of increasing the crystallinity and a step of rearranging crystals may be included.

In the case of the melting method, the sulfide solid electrolyte is obtained by preparing a mixture of raw materials as necessary, then heating and melting the mixture, followed by cooling and solidification.

The raw materials vary depending on a desired composition of the crystal phase or the amorphous phase, and, for example, raw materials containing Li, P, and S can be used. In the case where it is desired to obtain an argyrodite crystal phase containing Ha or a LPSHa crystallized glass containing Ha, raw materials containing Ha in addition to Li, P, and S can be further used.

Specifically, for example, in the case of obtaining an argyrodite crystal or a Li-P-S-Ha-based crystallized glass, raw materials containing Li, P, S, and Ha are used. In the case of obtaining an LPS-based crystal such as $Li_7P_3S_{11}$ or an LPS crystallized glass, raw materials containing Li, P, and S are used. In the case of obtaining an LGPS-based crystal such as $Li_{10}GeP_2S_{12}$, raw materials containing Li, Ge, and S are used. In the case of obtaining a thio-LISICON crystal, raw materials containing Li, S, Ge, P, and the like are used.

As the raw materials, well-known materials can be adopted.

As conditions in the step of mixing and reacting the raw materials, well-known conditions can be adopted. For example, in the case of the melting method, a well-known heating temperature during the heating and melting, and a well-known time, atmosphere, pressure, dew point, and the like during the heating and melting or the cooling and solidification can be adopted. Alternatively, an intermediate obtained by reacting the raw materials before melting may be used to perform melt synthesis therefrom.

· Step 2

The step 2 is a step of coarsely pulverizing the sulfide solid electrolyte obtained in the step 1 to obtain a coarsely pulverized product of the sulfide solid electrolyte (STEP S1).

In order to obtain a sulfide solid electrolyte powder having a particle diameter D50 of less than 1 μm by the fine pulverization in the step 3 to be described later, the sulfide solid electrolyte is coarsely pulverized by the coarse pulverization in the step 2 to about one tenth of a bead diameter, which are media to be used in a bead mill in the step 3.

As the coarse pulverization method, a method other than wet pulverization is preferred, and for example, a cutter mill (cut mill) is preferred.

The cutter mill is a method in which a rotor to which a cutter or the like is attached is rotated at a high speed, and the raw material is pulverized by a shearing force or a cutting force.

In the cutter mill, the contamination caused by a stainless steel component can be prevented by adopting, for example, a crushing blade made of stainless steel and coated with a low-abrasion coating material. Unlike coarse pulverization using a planetary ball mill, the coarse pulverization using a cutter mill does not require the use of alumina or zirconia balls, and thus the content of Al and Zr in the sulfide solid electrolyte powder finally obtained can be suitably reduced.

In addition to the coarse pulverization using a cutter mill, for example, a material corresponding to the coarsely pulverized product may be obtained by a method of directly obtaining a coarse powder from a melt.

The coarse pulverization using a bead mill of easily abradable alumina beads (for example, alumina beads having a purity of 99.5% or less and a Vickers hardness HV10 of 1,300 or less) or zirconia beads increases the content of Al or Zr in the coarsely pulverized product of the sulfide solid electrolyte. As a result, it is difficult to set both the content of Al and the content of Zr in the obtained sulfide solid electrolyte powder to less than 50 ppm by mass.

The coarse pulverization is preferably performed such that the particle diameter D95 of the coarsely pulverized product of the sulfide solid electrolyte is less than 100 μm. This is because it is suitable for the bead mill pulverization in the step 3.

Specifically, although depending on the type, a bead mill machine is provided with a filter called a screen for passing only a slurry to separate the beads from an outlet of a pulverization chamber. A gap of the filter is preferably about 100 μm or less.

A gap size of the filter can be selected, and in the case where it is desired to obtain a particularly fine powder as in the present embodiment, a bead size is not 0.5 mm in diameter, but small beads such as 0.3 mm in diameter are preferably used. In this case, the gap size of the filter needs to be 100 μm instead of 200 μm in consideration of dimensional errors of the beads and the like.

Therefore, a particle diameter D95 of the coarsely pulverized product obtained in the step 2 is preferably at least less than 100 μm in order to prevent clogging of the filter.

The coarse pulverization is preferably performed such that the particle diameter D95 of the coarsely pulverized product is 10 μm to 99 μm, and the particle diameter D95 is more preferably 10 μm to 70 μm, and still more preferably 10 μm to 50 μm. Here, the particle diameter D95 of the coarsely pulverized product is preferably less than 100 μm, more preferably 99 μm or less, still more preferably 70 μm or less, and even further preferably 50 μm or less, from the viewpoint of preventing the clogging of the filter (screen) at the outlet of the pulverization chamber. The particle diameter D95 is preferably 10 μm or more, from the viewpoint of increasing a viscosity of the slurry containing the coarsely pulverized product and a solvent to be subjected to the step 3 and preventing aggregation of the coarsely pulverized product.

The particle diameter D50 of the coarsely pulverized product obtained in the step 2 is preferably 5 μm to 30 μm, and more preferably 8 μm to 20 μm, from the viewpoint of preventing the clogging of the filter. Here, the particle diameter D50 is preferably 30 μm or less, more preferably 20 μm or less, and is preferably 5 μm or more, more preferably 8 μm or more.

After coarsely pulverizing the sulfide solid electrolyte, classification (sieving or the like) may be performed as necessary to obtain the coarsely pulverized product of the sulfide solid electrolyte.

· Step 3

The step 3 is a step of finely pulverizing the coarsely pulverized product of the sulfide solid electrolyte obtained in the step 2 to obtain a sulfide solid electrolyte powder (STEP S2).

The fine pulverization is preferably carried out using a bead mill. Although depending on the type, the bead mill is a method in which hard beads are rotated in a cylindrical container, so that the beads collide with a material to be crushed, that is, a fine powder is prepared by so-called collision pulverization. A fine sulfide solid electrolyte powder having a particle diameter D50 of less than 1 μm can be obtained by appropriately selecting a bead size and performing fine pulverization by such a method.

As the kind of the fine pulverization beads, high purity alumina beads are preferred from the viewpoint of having a good lithium ion conductivity, obtaining a fine sulfide solid electrolyte powder, and preventing the contamination caused by aluminum and zirconium and improving the lithium ion conductivity.

The high purity alumina beads preferably satisfy at least one of a purity of 99.9% or more and a Vickers hardness of 1800 HV10 or more, and more preferably satisfy both, from the viewpoint of preventing abrasion of the aluminum beads and the contamination caused by aluminum. Since abrasion of the vessel due to the beads can be further prevented by using the high purity alumina beads as described above, the contamination of the sulfide solid electrolyte powder caused by zirconium contained in the vessel can also be prevented.

The purity of the alumina beads is preferably 99.9% or more, more preferably 99.93% or more, still more preferably 99.95% or more, particularly preferably 99.99% or more, and is preferably as high as possible.

The Vickers hardness of the alumina beads is preferably 1800 HV10 to 2300 HV10. Here, the Vickers hardness is preferably 1800 HV10 or more, more preferably 1900 HV10 or more, still more preferably 2000 HV10 or more, and particularly preferably 2100 HV10 or more, from the viewpoint of abrasion resistance. The Vickers hardness is preferably 2300 HV10 or less from the viewpoint of preventing abrasion of the pulverization chamber (vessel) and the rotor.

The purity of the alumina beads can be measured by measuring an amount of impurities by ICP emission spectroscopy and subtracting a total amount of impurities from 100%. The Vickers hardness can be measured by pressing a pyramidal indenter made of diamond against a test piece, observing the resulting indentation using a microscope, and measuring a length of a diagonal line.

The fine pulverization may be dry pulverization or wet pulverization using a dispersion medium, and the wet pulverization is preferred from the viewpoint of obtaining a finer sulfide solid electrolyte powder having a particle diameter D50 of less than 1 μm. The dry pulverization is suitable for obtaining a powder having a particle diameter D50 of 1 μm to 3 μm, and the wet pulverization is suitable for obtaining a fine powder having a particle diameter D50 of less than 1 μm.

In the wet pulverization method, the coarsely pulverized product of the sulfide solid electrolyte may be dispersed or dissolved in a dispersion medium to form a slurry and pulverized. In addition to the solvent for the sulfide solid electrolyte, an additive such as a dispersant may be further added to the slurry.

The dispersion medium is not particularly limited, and a non-aqueous solvent is preferred since the sulfide solid electrolyte has a property of easily reacting with moisture and deteriorating.

The kind of the non-aqueous organic solvent is not particularly limited, and examples thereof include a hydrocarbon-based solvent, an organic solvent containing a hydroxy group, an organic solvent containing an ether group, an organic solvent containing a carbonyl group, an organic solvent containing an ester group, an organic solvent containing an amino group, an organic solvent containing a formyl group, an organic solvent containing a carboxy group, an organic solvent containing an amide group, an organic solvent containing a benzene ring, an organic solvent containing a mercapto group, an organic solvent containing a thioether group, an organic solvent containing a thioester group, an organic solvent containing a disulfide group, and a halogenated alkyl.

Examples of the hydrocarbon-based solvent include cyclohexane, heptane, octane, and toluene, and cyclohexane, heptane, and octane are preferred from the viewpoint of a low saturated moisture concentration. From the viewpoint of adjusting the moisture concentration, it is also preferable to use a mixed solvent in which these hydrocarbon-based solvents are mixed with toluene, dibutyl ether, or the like.

From the viewpoint of preventing a decrease in lithium ion conductivity due to a reaction between the sulfide solid electrolyte and water during the fine pulverization of the coarsely pulverized product of the sulfide solid electrolyte, the moisture concentration in the dispersion medium is preferably low. The moisture concentration in the dispersion medium may be, for example, 170 ppm by mass or less, 150 ppm by mass or less, 120 ppm by mass or less, or 100 ppm by mass or less.

In the case of using a dispersant as the additive, examples thereof include an ether compound, an ester compound, and a nitrile compound.

A content of the coarsely pulverized product of the sulfide solid electrolyte in the slurry is preferably 5 mass% to 35 mass%, more preferably 10 mass% to 33 mass%, and still more preferably 20 mass% to 30 mass%. Here, the content is preferably 5 mass% or more, more preferably 10 mass% or more, still more preferably 20 mass% or more, and is preferably 35 mass% or less, more preferably 33 mass% or less, still more preferably 30 mass% or less, from the viewpoint of pulverization efficiency and ease of handling of the slurry.

A solid content concentration in the slurry is preferably 5 mass% to 35 mass%, more preferably 10 mass% to 33 mass%, and still more preferably 20 mass% to 30 mass%. Here, the solid content concentration is preferably 5 mass% or more, more preferably 10 mass% or more, still more preferably 20 mass% or more, and is preferably 35 mass% or less, more preferably 33 mass% or less, still more preferably 30 mass% or less, from the viewpoint of the pulverization efficiency and the ease of handling of the slurry.

In the case of performing the fine pulverization using a wet bead mill, the beads for fine pulverization have a diameter of preferably 0.1 mm to 1 mm, more preferably 0.2 mm to 0.8 mm, and still more preferably 0.3 mm to 0.5 mm. Here, the diameter is preferably 0.1 mm or more, more preferably 0.2 mm or more, and still more preferably 0.3 mm or more, from the viewpoint of obtaining a sulfide solid electrolyte powder having a good lithium ion conductivity. The diameter is preferably 1 mm or less, more preferably 0.8 mm or less, and still more preferably 0.5 mm or less, from the viewpoint of obtaining a finely pulverized product having a desired small particle diameter.

A rotation peripheral speed of the mill when the fine pulverization is performed using the wet bead mill is preferably 6 m/sec to 12 m/sec, and more preferably 8 m/sec to 10 m/sec. When the rotation peripheral speed of the mill is within the above range, excessive pulverization of the sulfide solid electrolyte can be prevented, and aggregation of particles in the sulfide solid electrolyte powder can be prevented.

A pulverization time by the wet bead mill depends on the amount of the coarsely pulverized product to be pulverized, and for example, in the case where the coarsely pulverized product is about 150 g to 165 g, the pulverization time is preferably 30 minutes to 480 minutes, and more preferably 60 minutes to 240 minutes. Here, the pulverization time is preferably 30 minutes or longer, and more preferably 60 minutes or longer, from the viewpoint of reducing the particle diameter of the sulfide solid electrolyte powder. The pulverization time is preferably 480 minutes or shorter, and more preferably 240 minutes or shorter, from the viewpoint of preventing the excessive pulverization and ensuring a good lithium ion conductivity.

The sulfide solid electrolyte powder obtained in the step 3 may be further subjected to a drying step. Even when the dispersion medium and the additive remain in the sulfide solid electrolyte powder, they can be removed by drying.

As a drying method, a well-known method can be adopted, and for example, a hot plate, a drying furnace, an electric furnace, or the like can be used.

A temperature in the drying step is not particularly limited, and is, for example, 50°C to 300°C. In the case where the fine pulverization is performed using a dispersion medium, the drying may be performed by heating at a temperature equal to or higher than a boiling point of the dispersion medium.

A time in the drying step is also not particularly limited, and examples thereof include 10 minutes to 24 hours.

The drying step may be performed under a reduced pressure, for example, an absolute pressure of 50 kPa or less.

Further, the sulfide solid electrolyte powder obtained in the step 3 may be subjected to a heat treatment (annealing treatment). By performing the annealing treatment, the lithium ion conductivity can be improved.

A temperature and a time in the annealing treatment can be appropriately adjusted, and may be, for example, 200°C to 600°C for 10 minutes to 600 minutes. The heat treatment may be performed between the step 2 and the step 3.

<Solid Electrolyte Layer>

The sulfide solid electrolyte powder according to the present embodiment may be used in a solid electrolyte layer. That is, a solid electrolyte layer according to the present embodiment contains the sulfide solid electrolyte powder described in the above <Sulfide Solid Electrolyte Powder>, and a preferred embodiment thereof is the same.

The solid electrolyte layer according to the present embodiment is preferably used in a lithium ion secondary battery.

The solid electrolyte layer according to the present embodiment may contain a binder as necessary.

A content of the sulfide solid electrolyte powder in the solid electrolyte layer according to the present embodiment is not particularly limited, and may be appropriately determined according to performance of a target battery. For example, the content of the sulfide solid electrolyte powder with respect to the entire solid electrolyte layer is preferably 80 mass% or more, and more preferably 90 mass% or more.

Examples of the binder that can be contained in the solid electrolyte layer include a butadiene rubber (BR), an acrylate butadiene rubber (ABR), a styrene butadiene rubber (SBR), a polyvinylidene difluoride (PVdF), and a polytetrafluoroethylene (PTFE). A content of the binder in the solid electrolyte layer is sufficiently the same as that in the related art.

A thickness of the solid electrolyte layer is not particularly limited, and may be appropriately determined according to the performance of the target battery. For example, the thickness is preferably 10 $\mu$m to 50 $\mu$m, and more preferably 15 $\mu$m to 20 $\mu$m. Here, the thickness is preferably 10 $\mu$m or more, and more preferably 15 $\mu$m or more, from the viewpoint of obtaining a solid electrolyte layer that has increased mechanical strength, that is resistant to a stress such as vibration and bending, and that has high reliability. The thickness is preferably 50 $\mu$m or less, and more preferably 20 $\mu$m or less, from the viewpoint of improving the ion conductivity between positive and negative electrodes and increasing an energy density of the battery.

A method for forming the solid electrolyte layer is not particularly limited. For example, the solid electrolyte layer can be formed by dispersing or dissolving components constituting the solid electrolyte layer in a liquid medium to form a slurry, applying the slurry in the form of a layer (sheet), drying the slurry, and optionally pressing. If necessary, the binder may be removed by heating. The thickness of the solid electrolyte layer can be easily adjusted by adjusting an application amount or the like of the slurry.

Instead of the wet molding as described above, the solid electrolyte layer may be formed by pressing the solid electrolyte powder or the like by a dry method on a surface of a target (a positive electrode, a negative electrode, or the like) on which the solid electrolyte layer is to be formed. Alternatively, a solid electrolyte layer may be formed on another base material, and may be transferred to the surface of the target on which the solid electrolyte layer is to be formed. From the viewpoint that a strong solid electrolyte layer can be industrially stably formed on the surface of the target on which the solid electrolyte layer is to be formed, the solid electrolyte layer is preferably formed on the surface of the target by wet molding using a liquid medium.

<Lithium Ion Secondary Battery>

The sulfide solid electrolyte powder according to the present embodiment is used in a lithium ion secondary battery. That is, a lithium ion secondary battery according to the present embodiment contains the sulfide solid electrolyte described in the above <Sulfide Solid Electrolyte Powder>, and a preferred embodiment thereof is the same.

The lithium ion secondary battery according to the present embodiment includes a solid electrolyte layer, a positive electrode layer, and a negative electrode layer. The sulfide solid electrolyte powder may be contained in one or more of the solid electrolyte layer, the positive electrode layer, and the negative electrode layer, may be contained in two or more thereof, or may be contained in all thereof.

As configurations of the solid electrolyte layer, the positive electrode layer, and the negative electrode layer other than the sulfide solid electrolyte powder, well-known configurations can be adopted.

Specific examples are shown below, but the present invention is not limited thereto.

(Positive Electrode Layer)

The positive electrode layer includes at least a positive electrode current collector and a positive electrode active material. The positive electrode layer may further contain the sulfide solid electrolyte powder according to the present embodiment.

The positive electrode current collector may be a conductive plate material, and for example, a thin metal plate (metal foil) of aluminum, an alloy thereof, or stainless steel can be used. These are preferred because of having excellent electrolytic solution resistance and oxidation resistance.

The positive electrode active material is not particularly limited as long as it can reversibly occlude and release lithium ions, desorb and insert (intercalate) the lithium ions, or dope and dedope counter anions (for example, $PF_6^-$) of the lithium ions, and known positive electrode active materials can be used. Examples of the positive electrode active material include lithium cobalt oxide ($LiCoO_2$), lithium nickel oxide ($LiNiO_2$), lithium manganese oxide ($LiMnO_2$), lithium nickel manganese oxide, a composite metal oxide represented by $Li(Ni_xCo_yMn_zM_a)O_2$ ($x+y+z+a=1$, $0 \leq x \leq 1$, $0 \leq y \leq 1$, $0 \leq z \leq 1$, $0 \leq a \leq 1$, and M is at least one kind selected from Al, Mg, Nb, Ti, Cu, Zn, and Cr), and a polyaniline olivine positive electrode represented by $Li_aM_b(PO_4)_c$ ($1 \leq a \leq 4$, $1 \leq b \leq 2$, $1 \leq c \leq 3$, and M is at least one kind selected from Fe, V, Co, Mn, Ni, and VO).

The positive electrode layer may contain a binder that binds positive electrode active materials to each other and that binds the positive electrode active material to the positive electrode current collector. A well-known binder can be used.

The positive electrode layer may contain a known conductive auxiliary agent for a positive electrode, and examples thereof include carbon-based materials such as graphite and carbon black, metals such as copper, nickel, stainless steel, and iron, and conductive oxides such as indium tin oxide (ITO).

(Negative Electrode Layer)

The negative electrode layer includes at least a negative electrode current collector and a negative electrode active material. The negative electrode layer may further contain the sulfide solid electrolyte powder according to the present embodiment.

The negative electrode current collector is sufficiently a conductive plate material, and for example, a thin metal plate (metal foil) of copper or aluminum can be used. These are preferred because of having excellent electrolytic solution resistance and oxidation resistance.

The negative electrode active material is not particularly limited, and any material capable of inserting and desorbing lithium ions may be used. For example, metal lithium, a carbon-based material, silicon, a silicon alloy, or tin can be used.

The negative electrode active material is not particularly limited as long as it can reversibly occlude and release lithium ions, desorb and insert (intercalate) the lithium ions, or dope and dedope counter anions (for example, $PF_6^-$) of the lithium ions, and known negative electrode active materials can be used. Examples of the negative electrode active material include carbon-based materials such as graphite, hard carbon, and soft carbon, metals capable of forming an alloy with lithium such as aluminum, silicon, and tin, amorphous oxides such as silicon oxide and tin oxide, and lithium titanate ($Li_4Ti_5O_{12}$).

The negative electrode layer may contain a binder that binds negative electrode active materials to each other and that binds the negative electrode active material to the negative electrode current collector. A well-known binder can be used.

The negative electrode layer may contain a known conductive auxiliary agent for a negative electrode, and a conductive auxiliary agent same as the conductive auxiliary agent for the positive electrode can be used.

Those constituting the lithium ion secondary battery such as the solid electrolyte layer, the positive electrode layer, and the negative electrode layer are stored in a battery outer case. As a material of the battery outer case, well-known materials can be used, and specific examples thereof include nickel-plated iron, stainless steel, aluminum and an alloy thereof, nickel, titanium, a resin material, and a film material.

Examples of a shape of a lithium ion all-solid-state battery include a coin shape, a sheet shape (film shape), a folded shape, a wound cylindrical shape with a bottom, and a button shape, and can be appropriately selected according to an application thereof.

The lithium ion secondary battery according to the present embodiment can achieve a good lithium ion conductivity.

EXAMPLES

Hereinafter, the present invention is specifically described with reference to Examples, but the present invention is not limited thereto. Example 1 is an Inventive Example, and Example 2 is a Comparative Example.

<Test Example>

(Example 1)

Under a dry nitrogen atmosphere, a lithium sulfide powder (purity: 99.98%, manufactured by Sigma Corporation), a phosphorus pentasulfide powder (purity: 99%, manufactured by Sigma Corporation), a lithium chloride powder (purity: 99.99%, manufactured by Sigma Corporation), and a lithium bromide powder (purity: 99.995%, manufactured by Sigma Corporation) were weighed so as to have a composition of $Li_{5.4}PS_{4.4}Cl_{0.8}Br_{0.8}$, and were charged into a quartz-made test tube, followed by vacuum sealing. After melting at 750°C for 1 hour, the resultant was cooled to obtain a sulfide solid electrolyte.

The obtained sulfide solid electrolyte was coarsely pulverized using a cutter mill to obtain a coarsely pulverized product of the sulfide solid electrolyte.

Next, 165 g of the coarsely pulverized product of the sulfide solid electrolyte obtained above was added to 385 g of dehydrated dibutyl ether to obtain a slurry (slurry solid content concentration: 30 mass%). A sample container (vessel) made of zirconia-reinforced alumina was charged with 550 g of the slurry and 288 g of high purity alumina beads (purity:

99.99% or more, TB-03 manufactured by TAIMEI CHEMICALS Co., Ltd.) having a diameter of 0.3 mm, and the container was set in LABSTAR Mini LMZ015 manufactured by Ashizawa Finetech Ltd., followed by wet pulverization under the following conditions.

(Conditions)

· Bead filling rate in sample container: 70.2 vol%
· Peripheral speed: 8 m/sec
· Pulverization time: 240 min
· Slurry flow rate: approximately 1 L/min

Thereafter, the resultant was heated and dried at a temperature equal to or higher than the boiling point of the solvent under a nitrogen atmosphere to obtain a sulfide solid electrolyte powder.

(Example 2)

A sulfide solid electrolyte powder in Example 2 was obtained by the same method as in Example 1 except that instead of the high purity alumina beads having a diameter of 0.3 mm, alumina beads having a diameter of 0.3 mm and a purity of 99.5 mass% (AL9-0.3 manufactured by HIRA CERAMICS CO., LTD) were used.

<Evaluation>

[Particle Size Distribution: Particle Diameter D50 and Particle Diameter D90]

The particle diameter D10, the particle diameter D50, and the particle diameter D90 in the volume-based cumulative particle size distribution were measured using Micrtrao MT3300EX II and an ultra small capacity circulator Microtrac USVR manufactured by MicrotracBEL as a laser diffraction particle size distribution analyzer.

[BET Diameter]

The BET specific surface area determined by using the nitrogen adsorption BET multipoint method was measured, and the value calculated according to the following equation was defined as the BET diameter.

BET diameter (nm) = 6/[true density (g/cm$^3$) $\times$ BET specific surface area (m$^2$/g)] $\times$ 1000

[Lithium Ion Conductivity]

The sulfide solid electrolyte powder was formed into a powder compact at a pressure of 380 MPa and used as a measurement sample.
Next, the lithium ion conductivity was measured by using an AC impedance measurement device (potentiostat/galvanostat VSP, manufactured by Bio-Logic Sciences Instruments) under the following conditions.

Measurement frequency: 100 Hz to 1 MHz

Measurement voltage: 100 mV

Measurement temperature: 25°C

The lithium ion conductivity at 25°C was determined based on the obtained Nyquist plot.

[Content of Al and Content of Zr]

The sulfide solid electrolyte powder was subjected to an alkali dissolution treatment to form a solution. At this time, the residue generated during the dissolution treatment was recovered, dissolved with an acid, and formed into a solution. Al and Zr in the solution were each quantified by high-frequency inductively coupled plasma (ICP) emission spectrometry, and the content of Al and the content of Zr in the powder were determined.

[Crystallinity]

The sulfide solid electrolyte powder was subjected to X-ray diffraction (XRD) measurement, and the ratio of the crystal phase to the total of the ratio of the crystal phase and the amorphous phase was determined as the crystallinity.

[Table 1]

| | Fine pulverization condition | | | Physical property | | | | | | | |
|---|---|---|---|---|---|---|---|---|---|---|---|
| | Bead material (purity%) | Bead type | Bead diameter (mm) | Particle diameter D10 ($\mu$m) | Particle diameter D50 ($\mu$m) | Particle diameter D90 ($\mu$m) | BET diameter ($\mu$m) | Lithium ion conductivity. (mS/cm) | Content of Al (ppm by mass) | Content of Zr (ppm by mass) | Crystallinity (mass%) |
| Example 1 | Alumina (99.99%) | TB-03 | 0.3 | 0.38 | 0.58 | 0.98 | 0.17 | 4.1 | < 50 | < 50 | 92.1 |
| Example 2 | Alumina (99.5%) | AL9-0.3 | 0.3 | 0.34 | 0.54 | 0.93 | 0.15 | 3.7 | 10,500 | 820 | Not measured |

As shown in Table 1, in the sulfide solid electrolyte powder in Example 1 in which alumina beads having a high purity were used during the fine pulverization, both the content of Al and the content of Zr were greatly reduced as compared with the sulfide solid electrolyte in Example 2 as a Comparative Example, and it also achieved a high lithium ion conductivity.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2023-110731) filed on July 5, 2023, the content of which is incorporated herein by reference.

**Claims**

1. A sulfide solid electrolyte powder comprising, in content in a mass basis:

   less than 50 ppm of Al; and
   less than 50 ppm of Zr,
   wherein a particle diameter D50 is less than 1 $\mu$m.

2. The sulfide solid electrolyte powder according to claim 1,
   wherein a BET diameter calculated based on a BET specific surface area is 0.10 $\mu$m to 0.30 $\mu$m.

3. The sulfide solid electrolyte powder according to claim 1,

   wherein a sulfide solid electrolyte constituting the sulfide solid electrolyte powder comprises a crystal phase, and
   the crystal phase comprises an argyrodite crystal structure.

4. The sulfide solid electrolyte powder according to claim 1,
   wherein a sulfide solid electrolyte constituting the sulfide solid electrolyte powder has a composition represented by Li$_\alpha$PS$_\beta$ ($5.5 \leq \alpha \leq 5.6$ and $4.3 \leq \beta \leq 4.4$).

5. A solid electrolyte layer comprising the sulfide solid electrolyte powder according to any one of claims 1 to 4.

6. A lithium ion secondary battery comprising the sulfide solid electrolyte powder according to any one of claims 1 to 4.

FIG. 1

| SULFIDE SOLID ELECTROLYTE |

⋯ S1: COARSE PULVERIZATION

| COARSELY PULVERIZED PRODUCT OF SULFIDE SOLID ELECTROLYTE |

⋯ S2: FINE PULVERIZATION

| SULFIDE SOLID ELECTROLYTE POWDER |

## INTERNATIONAL SEARCH REPORT

| International application No. |
| --- |
| **PCT/JP2023/039782** |

| A. | CLASSIFICATION OF SUBJECT MATTER |
| --- | --- |

*C01B 25/14*(2006.01)i; *H01B 1/06*(2006.01)i; *H01B 1/10*(2006.01)i; *H01M 10/052*(2010.01)i; *H01M 10/0562*(2010.01)i
FI: H01B1/06 A; H01M10/0562; H01M10/052; H01B1/10; C01B25/14

According to International Patent Classification (IPC) or to both national classification and IPC

| B. | FIELDS SEARCHED |
| --- | --- |

Minimum documentation searched (classification system followed by classification symbols)

C01B25/14; H01B1/06; H01B1/10; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021/132537 A1 (MITSUI MINING & SMELTING CO., LTD.) 01 July 2021 (2021-07-01)<br>paragraphs [0001]-[0003], [0145], [0146], tables 1, 2 | 1-6 |
| X | JP 2019-186129 A (TOYOTA JIDOSHA KABUSHIKI KAISHA) 24 October 2019 (2019-10-24)<br>paragraphs [0057]-[0060], tables 2, 4 | 1-6 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 December 2023** | **16 January 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/039782**

| Patent document cited in search report | | | Publication date (day/month/year) | Patent family member(s) | | | Publication date (day/month/year) |
|---|---|---|---|---|---|---|---|
| WO | 2021/132537 | A1 | 01 July 2021 | US | 2022/0263122 | A1 | |
| | | | | paragraphs [0002]-[0004], [0154], [0155], tables 1, 2 | | | |
| | | | | EP | 4084113 | A1 | |
| | | | | KR | 10-2021-0100131 | A | |
| | | | | CN | 113348577 | A | |
| JP | 2019-186129 | A | 24 October 2019 | US | 2019/0319302 | A1 | |
| | | | | paragraph [0107], tables 2, 4 | | | |
| | | | | CN | 110380109 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020105604 A

- JP 2023110731 A